# EUROPEAN PATENT APPLICATION

(11) **EP 2 965 945 A1**
(43) Date of publication of application: **13.01.2016**
(21) Application number: 15002049.3
(22) Date of filing: 08.07.2015
(51) Int. Cl.: B60N 2/68, B61D 33/00, B60N 2/015, B60N 2/24, B64D 11/06

(54) **SEAT MOUNTING SYSTEM FOR VEHICLE**

(30) Priority: 11.07.2014 CZ 201429756 U
(71) Applicant: Borcad Cz s.r.o., 73945 Frycovice (CZ)
(72) Inventor: Cernoch, Jakuk, 75612 Horni Lidec (CZ)
(74) Representative: Kendereski, Dusan

(57) **Abstract**

Seat mounting system for transport vehicle comprises a supporting bracket (1), seat brackets (2) and a means of attachment (3) to the wall of the transport vehicle. Shape of the supporting bracket (1) is substantially a circle, and the cross section of this supporting bracket (1) decreases with the distance from the said means of attachment (3).

## Description

### Field of the Invention

Disclosed here is a device which is mounted onto the side wall of a transport vehicle, the function of which is to fix two seats next to each other and is intended mainly for trains, planes and buses.

### Background of the Invention

Currently used seat mounting systems in transport vehicles possess various structures and methods of being mounted to the vehicle. These systems are often production costs demanding, possess insufficient strength or high costs connected with usage of vehicles in which these seat mounting systems are used, what is caused by a high weight of seat bracket.

One of the methods is disclosed in patent document US2869615, where the bracket is attached to the floor by means of stands. This mounting structure has high manufacturing costs and high weight.

Another solution disclosed in patent document EP2581261 is a bracket attached to a frame placed behind a seat of transport vehicle. This solution requires high production costs and has high weight.

Another solution disclosed in patent document DE19736107 is a seat mounting system in transport vehicles, where a bracket is attached to the ceiling by means of bar. High weight of mounting system causes higher costs related to the usage of the vehicle.

Another construction solution is disclosed in patent document RU2009117162 and DE19736107, where the bracket is mounted to the vehicle floor and is L-shaped. This bracket has high costs related to the usage of the vehicles.

### Summary of the Invention

Previously mentioned drawbacks are eliminated by a seat mounting system in transport vehicle comprising a supporting bracket, seat brackets and a mean of attachment to the wall of transport vehicle, and which is in a preferred embodiment constructed with the shape of its diameter substantially a circle, wherein the cross section of this supporting bracket decreases with the distance from said means of attachment.

In preferred embodiment, the particular components of the seat mounting system are made of sheet of high-strength steel.

In preferred embodiment, the seat mounting system is provided with a system of attachment to the wall of the transport vehicle designed as an anchoring flange attached to the supporting bracket, wherein the anchoring flange is preferably U-shaped.

The presented technical solution comprises plurality of seat brackets intended to carry exactly two seats in the preferred embodiment.

In preferred embodiment, the supporting bracket of the seat mounting system consists of at least two connected parts.

### Brief Description of the Drawings

Fig. 1 illustrates a seat mounting system of the transport vehicle.
Fig. 2 illustrates particular components of the embodiment of the seat mounting system.

### Description of the Preferred Embodiments

The basic part of the seat mounting system of the transport vehicle is a supporting bracket 1. The shape of supporting bracket's diameter is substantially a circle, wherein the cross section of the supporting bracket decreases with the distance from the said means of attachment, therefore the shape of the supporting bracket might be e.g. a portion of the multilateral pyramid, a portion of cone or a portion of paraboloid. Two seat brackets 2 are attached to the supporting bracket.

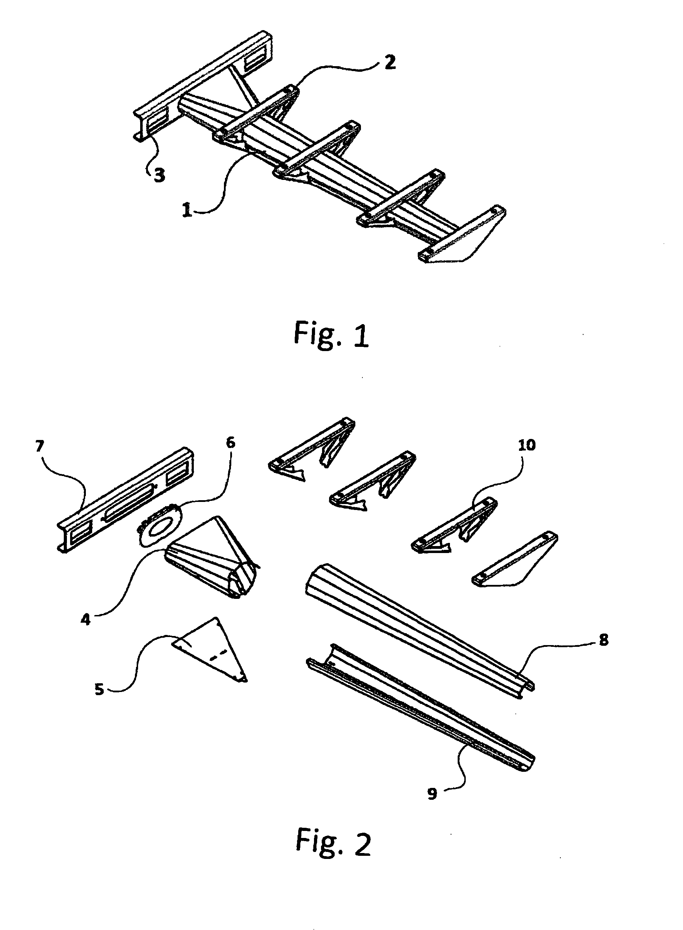

An exemplary embodiment of the supporting bracket 1 is a bracket illustrated in the Figs. 1 and 2, which consists of several parts. The first part of the supporting bracket consists of two parts - a bigger accordingly shaped part 4 and a smaller part in trapezoid shape 5. It comprises a reinforcing element, e.g. reinforcing rib 6, of which the function is to increase torsional rigidity of the supporting bracket of the seats. An anchoring U-shaped flange 7 attached to the first part provides connection between supporting bracket of the seats and supporting bracket of the vehicle. The supporting bracket of the seats is mounted to the wall of the vehicle. It carries the weight of the seat and weight of passengers. The second part has a shape of a portion of a hollow regular polyhedral pyramid divided into two identical parts 8, 9 perpendicular to the plane of the base. The seat holders 10 - brackets of triangular shape, which are welded to the upper side of the supporting bracket are mounted to the second part. Other parts of the seat structure are then attached to these brackets. All parts of the supporting bracket of the seats are firmly welded together.

The advantage of the components being divided into more units is the simplification of the production process and thus reducing the production costs. The material of the supporting parts is sheet of high-strength steel.

### Industrial Applicability

Seat mounting system according to the presented technical solution might be placed in all public transport vehicles, e.g. used for train seats, plane seats or bus transport.

## Claims

1. Seat mounting system for transport vehicle, comprising a supporting bracket (1), seat brackets (2) and a means of attachment to the wall of the transport vehicle **characterized in that** the shape of the diameter of the supporting bracket (1) is substantially a circle, wherein the cross section of this supporting bracket (1) decreases with the distance from the said means of attachment.

2. Seat mounting system of transport vehicle according to claim 1, **characterized in that** the supporting bracket (1) is made of metal sheet.

3. Seat mounting system for transport vehicle according to claim 2, **characterized in that** metal sheet is made of high-strength steel.

4. Seat mounting system for transport vehicle according to any of previous claims, **characterized in that** the said means of attachment to the wall of the transport vehicle is provided in form of anchoring flange (3) attached to the supporting bracket (1).

5. Seat mounting system for transport vehicle according to claim 4, **characterized in that** the attachment to the wall of the transport vehicle is carried out via anchoring U-shaped flange (3).

6. Seat mounting system for transport vehicle according to any of previous claims, **characterized in that** it comprises plurality of seat brackets (2) intended to carry exactly two seats.

7. Seat mounting system for transport vehicle according to any of previous claims, **characterized in that** the supporting bracket (1) consists of at least two interconnected parts.
